(19) **Europäisches Patentamt**

**European Patent Office**

**Office européen des brevets**

(11) **EP 1 090 800 A2**

(12) **EUROPEAN PATENT APPLICATION**

(43) Date of publication:
**11.04.2001 Bulletin 2001/15**

(51) Int. Cl.[7]: **B60K 31/00**, B60Q 1/54

(21) Application number: **00203443.7**

(22) Date of filing: **05.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.10.1999 IT VA990028**

(71) Applicants:
- **Sarti, Marco**
  **21032 Caravate (IT)**
- **Sarti, Marzia**
  **21032 Caravate (IT)**
- **Sarti, Arianna**
  **21032 Caravate (IT)**

(72) Inventors:
- **Sarti, Marco**
  **21032 Caravate (IT)**
- **Sarti, Marzia**
  **21032 Caravate (IT)**
- **Sarti, Arianna**
  **21032 Caravate (IT)**

(74) Representative:
**Pellegri, Alberto et al**
**c/o Società Italiana Brevetti S.p.A.**
**Piazza Repubblica, 5**
**21100 Varese (IT)**

(54) **Automatic on-board system of detection, recording and eventual sanctioning of illegal and/or dangerous driving of a road vehicule**

(57) An automatic on board system for detecting and eventually recording illegal and/or dangerous behaviors of a driver of a vehicle and for executing disciplinary sanctions consequent to such detections and records, in the form of a temporary disabling of the engine of the vehicle and/or of an electronic key or in the form of a non volatile recording of an offence to traffic rules on an electronic driving license, comprises

at least a sensor of the speed of vehicle;
at least a comparator of a signal representing the speed of vehicle produced by said sensor with a threshold speed value;

circuit means elaborating the result of the comparation and discriminating a frequency of repeated exceedings of said threshold value indicative of an illegal driving;

devices activated by said elaborating and discriminating means, implementing a temporary disabling of the engine and/or of said electronic key or recording onto said electronic driving license sanctions issued according to a pre-programmed cumulative sanctioning scheme.

FIG. 3

**Description**

The present invention relates to systems installable on vehicles for detecting and recording parameters and events while driving a vehicle.

Speed, that is excessive speed is widely recognized as the most frequent cause of road accidents or of their aggravation. Damages caused by road accidents, both physical to involved people as well as patrimonial to the damaged property are in most cases correlated to speed. An excessive crash speed vanifies protections provided by up-to-date technological solutions adopted to promote safety of driver and passengers involved in accidents. An excessive driving speed is also a tremendous risk factor for the transgressor as well as for other people.

To contrast effectively the behavior of certain drivers that systematically exceed speed limits is an effort in which authorities are constantly engaged but so far with insufficient results, as recurrent slaughters in periods of intense traffic demonstrate.

The scooter, which is a first object (vehicle) of desire of teenagers, because of its increasing diffusion and increased power of its engine, has statistically become a very dangerous vehicle, at least in large towns. The relatively young age of scooter drivers, that may often implies a poor or almost total ignorance of traffic rules (a driving license is not yet required to drive a scooter) and an inclination to ignore recommendations of worried parents or relatives, contributes to particularly reckless driving habits.

The obligation of wearing a helmet, a suggested introduction of a petty driving license even for scooters, and overall the suggested institution of the so-called driving license "with a defined mark allowance" for sanctioning drivers by suspending and/or revoking their driving license when repeatedly caught in violations to the traffic rules are all efforts that are made to curb the constant increase of the number of often tragic road accidents.

Social costs of road accidents are very high and tend to increase from year to year and at the same time also the economic costs increase, causing are increase of insurance policy premiums.

There is a diffuse worry among parents and relatives of young and very young drivers that their children may be easily induced to drive in a dangerous manner only for spirit of emulation, first of all to drive at an excessive speed a car or a scooter.

Moreover, besides the efforts made by authorities entrusted of the control of the traffic and of fining transgressors, it is a diffused conviction that the only hope to substantially reduce the number of accidents rests on a cultural change that can take place only through a patient educational and/or re-educational process, considering the ever increasing traffic on existing roads.

This is the aim of the suggested administrative suspension of the driving license after having being incurred in a certain number of violations as detected and sanctioned by a policeman, that would eventually impose on the recidive driver to sit for a fresh examination in order to regain a drive license.

It has now been found and is the object of the present invention a highly effective system that in a fully automatic manner detects, records and eventually sanctions a driver in function of such detections and recordings.

In practice the system of the invention behaves like a "tutor" that, besides informing the driver that he is overcoming certain speed limits or is behaving illegally, may factually sanction the driver, if he does not make his driving correct, of course making him always perfectly aware of the about to issue and of the eventually issued disciplinary sanction.

Essentially the system of the invention comprises at least a sensor of the speed of the vehicle on which the system is installed, producing a signal that may be processed, preferably a digital signal.

A comparator of the signal representing the speed of the vehicle with a programmable threshold value produces a certain value that may be readily recorded in an appropriate buffer.

Logic means for processing the results of comparations may discriminate the frequency with which the threshold is being exceeded indicative of an illegal driving behavior.

The system installed onto the vehicle, besides preliminarily signaling to the driver that the speed limit is being exceeded, in case the driver continues in his an illegal behavior for longer than a certain time, executes a certain disciplinary action, according to a pre-established scheme of sanctions.

In case of scooters for which a driving license is not required and whose highest permissible speed is substantially pre-established independently of the area being driven through, whether an urban zone or as an extra-urban zone, but even in case of other vehicles that must respect a certain speed limit, a disciplinary action that can be automatically executed by the system (after a fixed delay time from the instant it is decided, in order to permit to return home or to safely park the vehicle) is to disable specific devices that cause the stop of the engine and an inability to restart it for disabling the restart for a certain number of days.

A young driver is so taught that his obstinacy in driving his scooter or vehicle at an excessive speed will deprive him of the use of it for a certain number of days.

In the most general case of vehicles destined to travel on urban, extra-urban roads and highways, on which there are speed limits established by law that differ from one another, the system can be used as a punishing "tutor", on the base of a pre-established maximum speed limit, and will act only when such a pre-programmed speed limit is surpassed.

Alternatively, and most effectively, the system of the invention may exploit a desirable installation of information structures along the roads such as radio broadcasting apparatuses of the imposed speed limit installed at the locations where the speed limit changes. Whether such broadcasting stations are placed in the territory just for signaling to incoming vehicles that they are entering an area wherein a certain speed limit is imposed, in order to increase the awareness of drivers, or specifically for increasing the effectiveness of the self-sanctioning system of the invention, the system installed on the vehicle may be equipped with a simple receiver able to decode the signal broadcast by a transmitter placed on the border between two areas with different speed limits and with processing means for update automatically the programmed threshold value with which the instantaneous speed detected by the speed sensor will be compared, as long as a new updating of this reference value occurs in passing by another transmitter.

The advantages offered by the system of the invention are even more evident in the case of a desirable decision of instituting the so-called "electronic driving license", i.e. driving licenses issued in the form of smart cards, equipped with a support for storing data in a non volatile manner not violable by the owner of the driving license, such to allow the encrypted writing of renewals, suspensions, limitations, duties, recordings and references to eventual fines, providing an inviolable true history of the behavior of the driver from the date of issue of his driving license. These data recorded on the electronic driving license may be decrypted and read on the display of an instrument in posses of policemen or other officers providing a profile of the owner of the driving license.

The presence of such a support for recording data on an electronic driving license card, would be exploitable by the system of the invention as a device for recording data and/or disciplinary sanctions automatically issued by the system.

Through a pre-programmed scheme of cumulative sanctioning, the system of the invention is perfectly able to compute the issued disciplinary sanctions and, when a certain limit is reached, to suspend the validity of the driving license recording the sanction and the date of suspension on the electronic driving license.

The owner of the electronic driving license would be alerted by the system, by way of a visual and/or acoustic interface, of the recording of a certain sanction and eventually of the suspension of his driving license, for a programmed period of time as dictated by law, in which case he would no longer entitled to drive for the whole period of suspension.

Of course, in the case in which the automatically sanctioning system of the invention is based on the use of an electronic driving license with a support of an adequate capacity for recording data, it will include a suitable smart card reader/writer station having a slot into which must be inserted a valid electronic driving license in order to allow the start-up of the engine of the vehicle.

Each vehicle may be programmably enabled only if the on board system of the invention detects the presence of an electronic driving license belonging to anyone of a limited number of authorized users. In this way the system functions also as an antitheft device. Even the registration data of the particular vehicle may be recorded on electronic driving license being used for driving it together with the eventually issued sanctions.

In case of suspension of the driving license, the functionality of the electronic driving license as "ignition key" can even be disabled and remain so during the whole period of suspension.

The electronic driving license will have a permanently printable exterior that may include a photo of the driver and basic personal data thus representing a document of identification even in absence of a card reader instrument for accessing the data permanently stored in it.

Of course the system of the invention may optionally include other input/output parts.

In particular, where there are not electronic driving license of the above mentioned characteristics, or even in the case of use of electronic driving license with support for non volatily recording encrypted data, the system of the invention may include a transmitter for transmitting data relative to an issued disciplinary action against the titular of the electronic driving license or to the driver of the identified vehicle, to a centralized system that collects and stores the information in a file registered under the name of the titular of the electronic driving license and/or of the owner of the registered vehicle.

The system may perform also other controls and may verify other law fulfillments, such as the fastening of the seat belts, the extraction of the helmet out of its housing of a scooter, signaling in advance to the driver the infringement. Of course, it may monitor any persistent infringement of the laws and analyze the "behavior" of the driver eventually issuing a certain sanction, either according to the above described alternative or concomitant schemes.

The system of the invention, and in particular the embodiment based on the use of electronic driving license of the "smart card" type provided with abundant data recording memory capacity, may even be advantageously associated to an automatic system for continuously recording in a FIFO mode and eventually storing vehicle data images and sounds that precede and/or follow a certain event occurred to the vehicle, typically an impact or an effraction attempt, such as the "black box" system disclosed in the European patent application No. 99201011.6 that claims the priority of the Italian patent No. VA/98/A/0006 filed on April 3, 1998.

The capacity of data storage offered by smart card based electronic driving licenses may be exploited as a support for storing data in an inviolably encrypted form, relative to the video and eventually audio sequence immediately preceding the triggering to a permanent stop of the automatic storing system, decodable by a fiduciary of the insurance company for controlling the dynamics and the responsibilities of the accident. In this kind of applications, the memory buffer organized in the data storage resources of the electronic driving license for storing images, sounds and eventual other current parameters in a FIFO mode, such as vehicle speed, the state of the direction indicators, lights etc., will be stopped and made accessible and/or the recording system reset and re-enabled only by an authorized officer after a collision or an effraction.

This combination of the two systems is functional to exploit the data storage capacity offered by a smart card based electronic driving license, that must be necessarily introduced, according to the present invention, in read/write station or drive of the on-board system, to allow the start and the normal functioning of the engine of the vehicle.

Naturally the basic system installable onto the vehicle may include other optional elements, for increasing the effectiveness or even for supporting other auxiliary functions, either directly suitable to make the self-sanctioning system more precise and effective or for other auxiliary functions.

The different aspects and advantages of the invention will become even more evident through the following description of several embodiments and by referring to the attached drawings, wherein:

Figure 1 is a basic diagram of the system of the invention according to a first embodiment;
Figure 2 is a basic diagram of the system of the invention according to a different embodiment;
Figure 3 is a basic diagram of the system of the invention according to a third embodiment;
Figure 4 is a flow chart for an embodiment of the system of the invention, relative to the routines of detection, storage and behavior analysis phases:
Figures 5a, 5b and 5c shows alternative flow charts relative to different self-sanctioning schemes.

The figures and the following relative description illustrate possible embodiments of the system of the invention, they are not exhaustive of all embodiments that may be devised for adapting the self-sanctioning system of the invention to specific needs or traffic rules or to exploit the ability of the basic system of the invention to support and perform other useful functions. Several of these expansion possibilities of the basic system of the invention will be mentioned without implying any limitation to the specific examples.

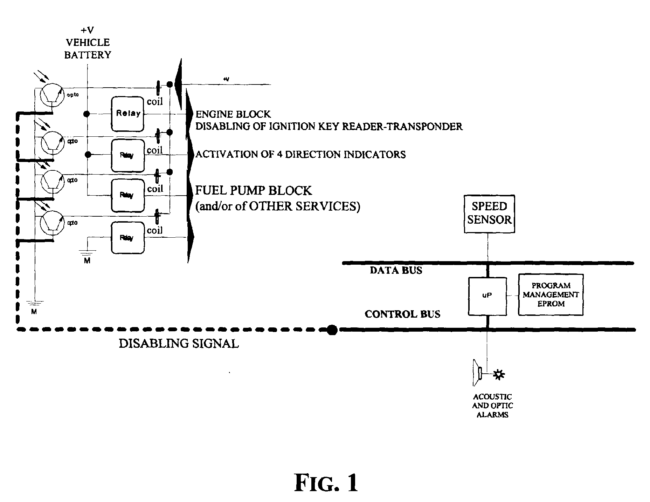

By referring to Fig. 1, the basic scheme of a system of this invention for data detection, storage, analysis and execution of disciplinary actions includes a microprocessor μP and a read only memory, for example a FLASH-EPROM or EEPROM memory, onto which the program managing the system is installed, thus having the possibility of updating it whenever necessary to modify or adequate the self-sanctioning scheme or add other functions. The read only memory may store identification data of the vehicle and data (codes) of an eventual electronic ignition key and/or of one or more electronic driving licenses of the smart card type that are authorized to drive the vehicle. The microprocessor, besides having its own elaboration RAM memory, includes a system's clock providing a precise time reference.

Other essential elements of the system are a speed sensor that can be any transducer commonly used for this purpose that detects the instantaneous speed of the vehicle and generates a signal representing the detected speed, preferably in form of a digital datum, and optical and/or acoustic signaling devices.

Data input devices, such as the speed sensor in the depicted example, are interfaced to the microprocessor through a data bus while output devices such as the signaling devices in the example of in Fig. 1, are interfaced through a control bus.

At least a wire of the control bus may be switched to a certain logic state and is coupled to functional circuits and signaling systems through optic isolators and relays, among which the circuit that permits the start of the engine.

According to this first embodiment, which is particularly useful for scooters and other vehicles, the eventual disciplinary action executed by the self-sanctioning system of the invention, consists in disabling the circuit of the ignition key of the engine. This is carried out by the microprocessor by commanding a certain logic state of a block signal that will impede the start of the engine for the whole duration of the issued sanction.

As indicated for example purposes in the diagram of Fig. 1, such a block signal can be used, to block the fuel pump, to activate the direction indicators and to interrupt the current path to the ignition coil.

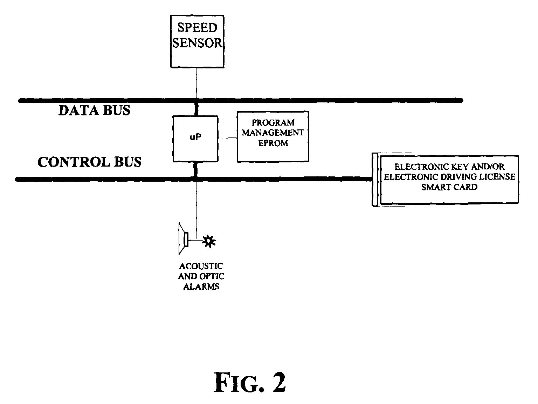

A basic diagram of the system of the invention according to a different embodiment based on the use of a suitable mobile data storage support, for example a FLASH-CARD or a so-called SMART-CARD having an EEPROM data storage support, in which are organized buffers of different capacities depending on specific storage needs, is depicted in Fig. 2. Such an electronic card containing identification codes is used as a personal ignition key of the engine of the vehicle or, most preferably is an electronic driving license that is usable as a personal ignition key of the engine of the vehicle and that provides for a large capacity data storage support that may be accessed by the microprocessor of the system of the invention.

The "drive" in which read/write operations on the electronic key or on the electronic driving license and the eventual storage of data in suitably organized buffers of a nonvolatile memory cell array present on the card (whether a personal electronic key or an all-round electronic driving license) may be interfaced to the microprocessor through the data bus.

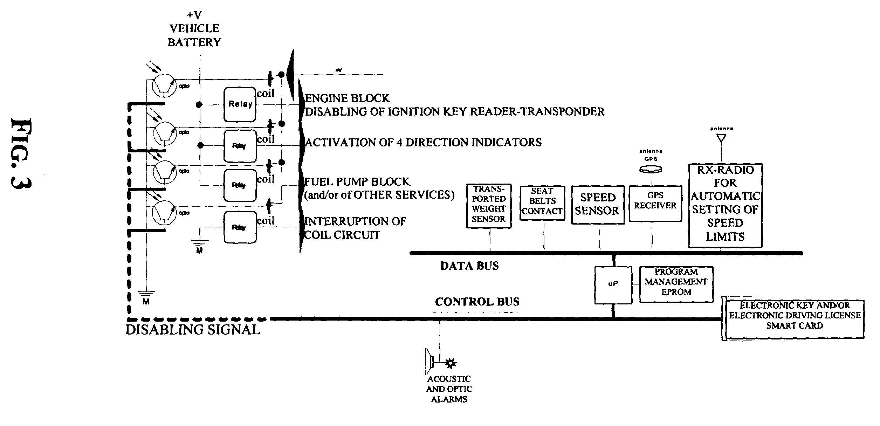

An exemplification of a system of the invention according to a different embodiment is depicted in Fig. 3, in which, besides combining the self-sanctioning scheme of temporary block of the vehicle (ref: Fig. 1) with a sanctioning scheme that contemplates a disabling of the electronic key and/or of the recording on an electronic driving license of sanctions issued by the system supports other additional functions.

One of said additional functions, that allows a constant monitoring of the driving behavior can be implemented only if a certain territory is equipped with means for automatically updating the limit that is used by the system on board of a vehicle when entering or leaving an area on which a certain speed limit is imposed (for example when entering and leaving a built-up area).

In these conditions, the system of the invention may be provided with a suitable radio receiver able to detect and decode a broadcast signal and extract a datum representing the new speed limit as vehicle passes near a fixed broadcasting transmitter that may be installed on the same support of the corresponding road signal. The so acquired digital datum of the new speed limit is processed by the microprocessor that updates in a real time mode the speed comparison threshold.

Naturally such fixed transmitters, installed at the locations at which the speed limit changes, depending on the transit direction, may irradiate the broadcast radio signal in a directional fashion permitting a correct discrimination of information that are effectively received by the on board systems of vehicles travelling in opposite directions.

Of course, there are many other data that may be optionally input to the microprocessor for monitoring and assessing the behavior of the driver and/or to store other pertinent data in the memory buffers of the electronic key or of the electronic driving license inserted in the dedicated read/write apparatus data produced by a sensor that detects whether seat belts are fastened or not, a GPS transponder for elaborating direction and/or signaling the position of the vehicle are depicted in Fig. 3, as examples of possible auxiliary sub-systems that may be present on the vehicle.

Of course, other input devices and other output devices may be optionally added as needed, coupling them respectively to the data bus or to the control bus of the basic system of the invention.

For example, as indicated in Fig. 3, in case of a scooter, a weight sensor may be installed to provide a further input eventually manifesting an illegal transportation of a passenger, that will be detected and acted upon by the self-sanctioning system of the invention.

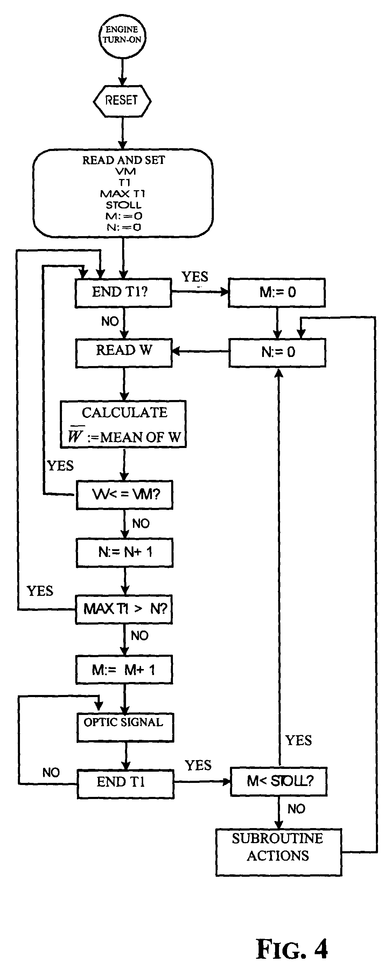

A possible flow chart of the routines of detection, storage and analysis of speed data is depicted in Fig. 4.

VM is the value read and set by the system at start-up. This value may correspond to a certain fixed value (for example 50Km/h in the case of a scooter) or may be a value that can be set manually only at the start of the vehicle and which is thereafter automatically updated by the system every time it passes near a fixed transmitter that broadcast a radio signal carrying the information of a certain speed limit.

T1 is a pre-established time interval of about of 10-15 seconds, or more generally sufficient to discriminate substantially transitory surpassings of the speed limit (for example while surpassing another vehicle or because of a particular morphology of the road) that are not considered, if their frequency in the interval T1 of analysis remains smaller than a certain limit. In practice the algorithm of analysis may consider the pre-established time T1 as an observation temporal window.

The system may discretize the value of the detected instantaneous speed (VV), for example by calculating its average value in a time interval of 0.1 seconds, thus producing a value $\overline{VV}$. If this value exceeds the speed limit VM, a count N is incremented, thus storing the times the current speed limit is exceeded in the interval T1.

The count N is compared with the pre-set maximum value MAX_T1: if N is lower than MAX_T1 the driving behavior is tolerated, otherwise a second count M is incremented, meaning that during the time T1 the speed limit has been exceeded. This is communicated to the driver for example by optical and/or acoustic signaling.

Once an excessively high speed is detected in the time interval T1, the monitoring of speed is interrupted till the end of the time interval T1, because any further detections would not modify the result that the speed limit has not been respected during this time interval.

At the end of the time interval T1, the value M is compared with another pre-set threshold value STOLL, establishing a minimum number of consecutive observation intervals, during which surpassing of the speed limit is detected for eventually sanctioning the driver. If M is greater than STOLL, the sanction is issued and executed, otherwise a new observation interval T1 is started, resetting the count N but keeping the current value of M.

If the drive behavior during this successive observation interval T1 proves to be correct (MAX_T1>N), both counts M and N are reset.

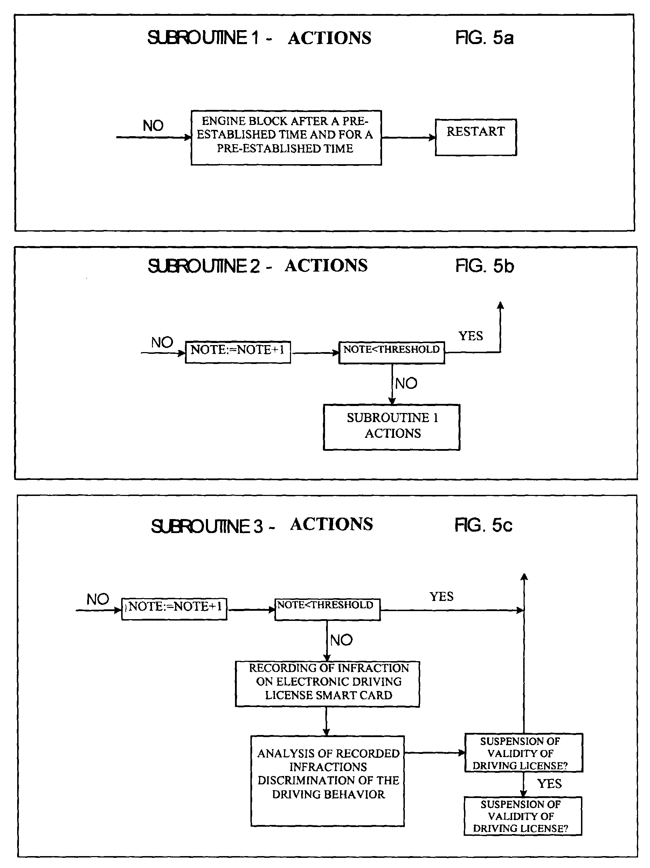

Several examples of sanction executions are described in the form of flow charts in Figs. 5a, 5b, 5c.

A first sanction that can be adopted, as illustrated in Fig. 5a, consists in blocking the vehicle after a pre-established time, for examples by a circuit arrangement of Fig. 1 and/or disabling the electronic ignition key by a circuit arrangement of Fig. 2 or of Fig. 3, and its successive re-enabling at the end of a certain time during which practically the vehicle cannot be used.

A different sanctioning scheme may be the one of Fig. 5b, in which a further tolerance of a certain number of sanctions (the value THRESHOLD) may be contemplated. The issued sanctions may be counted a dedicated counter NOTE before eventually executing a block of the vehicle and/or a disabling of the electronic ignition key.

According to a third sanctioning scheme, suited for the case of introduction of a so-called "mark driving license", a certain number of automatically issued sanctions may be tolerated before permanently recording the infringement on the electronic driving license. After a new infringement has been recorded, the system analyzes the so updated driving "history" eventually recording a suspension of the driving license, according to the applicable traffic rules.

## Claims

1. An automatic on board system for detecting and eventually recording illegal and/or dangerous behaviors while driving a vehicle and for executing disciplinary sanctions consequent to such detections and records, in the form of a temporary disabling of the engine of the vehicle and/or of an electronic key or of a non volatile recording of an offence to traffic rules on an electronic driving license, comprising

   at least a sensor of the speed of vehicle;
   at least a comparator of a signal representing the speed of vehicle produced by said sensor with a threshold speed value;
   circuit means elaborating the result of the comparation and discriminating a frequency of repeated exceedings of said threshold value indicative of an illegal driving;
   devices activated by said elaborating and discriminating means, implementing a temporary disabling of the engine and/or of said electronic key or recording onto said electronic driving license data of sanctions issued according to a pre-programmed cumulative sanctioning scheme.

2. The system of claim 1, characterized in that it further comprises means for alerting the driver of a detected exceeding threshold speed value.

3. The system of claim 1, characterized in that it comprises means for signaling to the driver a surpassing of a given frequency of detections of an excessive speed frequency indicative of an illegal driving behavior.

4. The system of claim 1, characterized in that said threshold value of the speed is automatically updated by the system onboard of the vehicle upon reception of a signal broadcast by fixed stations along the road being traveled.

5. The system according to any of the preceding claims, characterized in that said implementing means progressively reduce the power output of the engine of the vehicle as long as the frequency of detection of an excessive speed drops below said given frequency.

6. The system according to claim 1, characterized in that said electronic driving license is also an electronic key for starting the vehicle.

7. The system according to claim 1, characterized in that it comprises a transmitter for transmitting data of sanctions issued to a receiving station that accesses a centralized system for recording said sanctioning data in the file of the personal driving license.

+V
VEHICLE
BATTERY

coil

Relay

ENGINE BLOCK
DISABLING OF IGNITION KEY READER-TRANSPONDER

coil

Relay

ACTIVATION OF 4 DIRECTION INDICATORS

coil

Relay

FUEL PUMP BLOCK
(and/or of OTHER SERVICES)

coil

Relay

M

M

DISABLING SIGNAL

SPEED
SENSOR

DATA BUS

uP

PROGRAM
MANAGEMENT
EPROM

CONTROL BUS

ACOUSTIC
AND OPTIC
ALARMS

**FIG. 1**

**FIG. 2**

**FIG. 3**

FIG. 4

---

SUBROUTINE 1 - ACTIONS          FIG. 5a

NO → ENGINE BLOCK AFTER A PRE-ESTABLISHED TIME AND FOR A PRE-ESTABLISHED TIME → RESTART

---

SUBROUTINE 2 - ACTIONS          FIG. 5b

NO → NOTE:=NOTE+1 → NOTE<THRESHOLD → YES ↑

NO ↓

SUBROUTINE 1 ACTIONS

---

SUBROUTINE 3 - ACTIONS          FIG. 5c

NO → NOTE:=NOTE+1 → NOTE<THRESHOLD → YES →

NO ↓

RECORDING OF INFRACTION ON ELECTRONIC DRIVING LICENSE SMART CARD

↓

ANALYSIS OF RECORDED INFRACTIONS DISCRIMINATION OF THE DRIVING BEHAVIOR → SUSPENSION OF VALIDITY OF DRIVING LICENSE?

YES ↓

SUSPENSION OF VALIDITY OF DRIVING LICENSE?

---